# EUROPEAN PATENT APPLICATION

(11) **EP 3 128 654 A1**
(43) Date of publication of application: **08.02.2017**
(21) Application number: 15772698.5
(22) Date of filing: 30.03.2015
(51) Int. Cl.: H02K 7/116, H02K 5/02

(54) **MICRO MOTOR, MICRO-GEARED MOTOR USING MICRO MOTOR, AND MICRO MOTOR MANUFACTURING METHOD**

(30) Priority: 31.03.2014 JP 2014073461
(71) Applicant: Namiki Seimitsu Houseki kabushikikaisha, Adachi-ku Tokyo 123-8511 (JP)
(72) Inventor: FUKUSHIMA, Eri, Kuroishi-shi Aomori 036-0539 (JP); SATO, Akira, Kuroishi-shi Aomori 036-0539 (JP); KOGAWA, Takeshi, Kuroishi-shi Aomori 036-0539 (JP)
(74) Representative: Prinz & Partner mbB
(86) International application number: PCT/JP2015/059879
(87) International publication number: WO 2015/152139

(57) **Abstract**

Provided is a micro motor with micro diameter that can be manufactured with high accuracy and efficiency. The micro motor (10) includes a tubular motor housing (11), a motor shaft (12) that is supported in the motor housing (11) and rotationally driven, and a connecting member (16) that covers one opening of the motor housing (11) and allows the motor shaft (12) to be inserted to project outward, and the micro motor (10) can transmit rotation of the motor shaft (12) to a planetary gear mechanism (driven unit) (20) as another unit. The connecting member (16) integrally includes a bearing (16c) for rotatably supporting the motor shaft (12) and an output side connecting part (16a) that can be connected to a tubular casing (21) of the planetary gear mechanism (20).

## Description

### TECHNICAL FIELD

The present invention relates to a micro motor used for, for example, DCA (Directional Coronary Atherectomy) catheters, OCT (Optical Coherence Tomography) catheters, other medical devices, physical and chemical devices, and industrial devices, and to a micro-geared motor with a micro motor, and a method for manufacturing a micro motor.

### BACKGROUND ART

As an invention of this kind, there has been a micro-geared motor in which a micro motor (1) and a planetary gear mechanism (9) are coaxially connected and rotation of the micro motor is transmitted to the planetary gear mechanism, as described in Patent Literature 1, for example.

In this technique, a micro motor includes a rotor magnet (6), a motor shaft (5) provided on the shaft center of the rotor magnet (6) so as to rotate together with the rotor magnet (6), a stator coil (7) provided around the rotor that can carry current, a tubular motor housing (3A) covering surroundings of the rotor magnet and the stator coil, a connecting member that covers one of openings of the motor housing, allows the motor shaft to be inserted to project outward, and supports a bearing (4a) inside, and a driving gear (8) fixed to a projecting part of the motor shaft.

In addition, the planetary gear mechanism includes a tubular casing (3B) having an inner gear (16) on the inner periphery, a plurality of planetary gears (14) that engages with the inner gear and the driving gear, and supporting rotators (13) that are rotatably supported while rotatably supporting each of the plurality of planetary gears.

According to the above technique, the micro motor and the planetary gear mechanism are connected via a connecting member with substantially tubular shape, and the connecting member has another bearing (4a) fitted inside. Therefore, it is necessary to process many peripheries with high accuracy such as an inner periphery of the connecting member and an outer periphery and an inner periphery of the bearing (4a) to prevent increase in coaxiality.

In particular, for a micro motor with a micro outer diameter of 3 mm or less, it is likely that it is difficult to process many peripherals with high accuracy and to assemble the connecting member and the bearing (4a).

### CITATION LIST

### PATENT LITERATURE

Patent Literature 1: Japanese Patent No. 4789280

### SUMMARY OF INVENTION

### PROBLEMS TO BE SOLVED BY THE INVENTION

The present invention is developed in consideration of the above circumstances, and an objective of the present invention is to provide a micro motor with a micro diameter that can be manufactured with high accuracy and efficiency and to provide a micro-geared motor with such a micro motor and a method for manufacturing such a micro motor.

### SOLUTIONS TO THE PROBLEMS

One means for solving the problem described above is a micro motor including a tubular motor housing, a motor shaft that is supported in the motor housing and rotationally driven, and a connecting member for covering one opening of the motor housing and allowing the motor shaft to be inserted to project outward. The micro motor is capable of transmitting rotation of the motor shaft to a driven unit as another unit, and the connecting member integrally processes a bearing for rotatably supporting the motor shaft and an output side connecting part that can be connected to a tubular casing of the driven unit.

### ADVANTAGEOUS EFFECTS OF THE INVENTION

Since the present invention has a structure as described above, it is possible to manufacture a micro motor with a micro diameter with high accuracy and efficiency.

### BRIEF DESCRIPTION OF THE DRAWINGS

Fig. 1 is a cross-sectional view illustrating an example of a micro-geared motor according to the present invention.
Fig. 2 is a perspective view of the micro-geared motor where inside of a main part is shown.
Fig. 3 is a cross-sectional view illustrating another example of the micro-geared motor according to the present invention where planetary gear mechanism side is enlarged.
Fig. 4 is a cross-sectional view illustrating another example of the micro-geared motor according to the present invention where planetary gear mechanism side is enlarged.
Fig. 5(a) is a plan view of an example of a partition member and Fig. 5(b) is a cross-sectional view of the partition member.

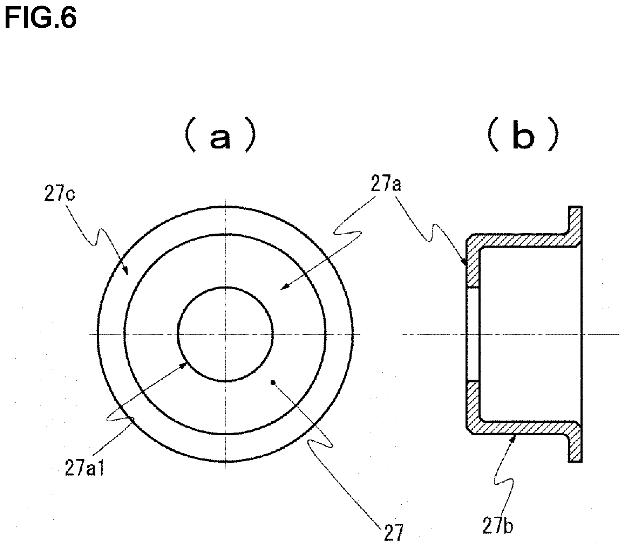

Fig. 6(a) is a plan view of another example of a partition member and Fig. 6(b) is a cross-sectional view of the partition member.

### DESCRIPTION OF EMBODIMENTS

A first aspect of the present embodiment is a micro motor including a tubular motor housing, a motor shaft supported in the motor housing and rotationally driven, and a connecting member that covers one of openings of the motor housing and allows the motor shaft to be inserted to project outward in which rotation of the motor shaft can be transmitted to a separate driven unit. The connecting member integrally processes a bearing rotatably supporting the motor shaft and an output side connecting part that can be connected to a casing of the driven unit.

According to this structure, since the bearing and the output side connecting part are integrally processed with high accuracy, a step for processing a fitting surface for fitting another bearing, a step for assembling another bearing, and the like are not necessary. In particular, it is effective to manufacture a micro motor with micro outer diameter of 3 mm or less with high accuracy and efficiency.

"Integrally process" described above means integrally forming the bearing and the output side connecting part by performing certain processing (for example, cutting, forging, molding, and casting) on a base material before being processed. "Integrally process" described above does not include a structure in which another bearing or output side connecting part is assembled to integrated with a bearing bracket or the like.

As a second aspect, in order to effectively minimize unevenness of rotation and wobbling of the axis at a rotating part, the bearing serves as a dynamic pressure bearing that locally generates high lubrication film pressure at several locations in the circumferential direction.

As a third aspect, in order to improve properties for holding lubricant oil, a circular space surrounding the outer periphery of the motor shaft adjacent to the axis direction against the bearing is provided at an inner diameter side of the connecting member so that lubricant oil is held in the circular space.

As a fourth aspect, in order to improve properties for holding lubricant oil more effectively, the bearing is provided near the center of the axis direction of the whole connecting member, and two circular spaces are provided adjacent to both sides of the bearing.

As a fifth aspect, in order to improve connectibility to a driven unit, the output side connecting part of the micro motor is connectable to the casing of the driven unit and the output side connecting part is formed in a tubular shape so as to be fitted to an end of the casing.

As a sixth aspect, in order to improve assemblability of the micro motor, the connecting member has the output side connecting part at one end and a motor side connecting part fitted to the motor housing at the other end.

"Fitting" in the fifth and the six aspects includes fitting with an allowance and press fitting, and in case of the former, it is preferable that adhesive agent be provided.

As a seventh aspect, as a specific aspect for transmitting rotational force with high accuracy, a planetary gear mechanism as the driven unit is connected to the output side connecting part, and the rotational force transmitted from the motor shaft is output after the speed of the rotational force is varied by the planetary gear mechanism.

As an eighth aspect, a method for manufacturing the micro motor with high accuracy and efficiency includes processing the bearing and the output side connecting part integrally with the connecting member.

### First Embodiment

Next, preferred embodiments with the above aspects will be described in detail with reference to the drawings.

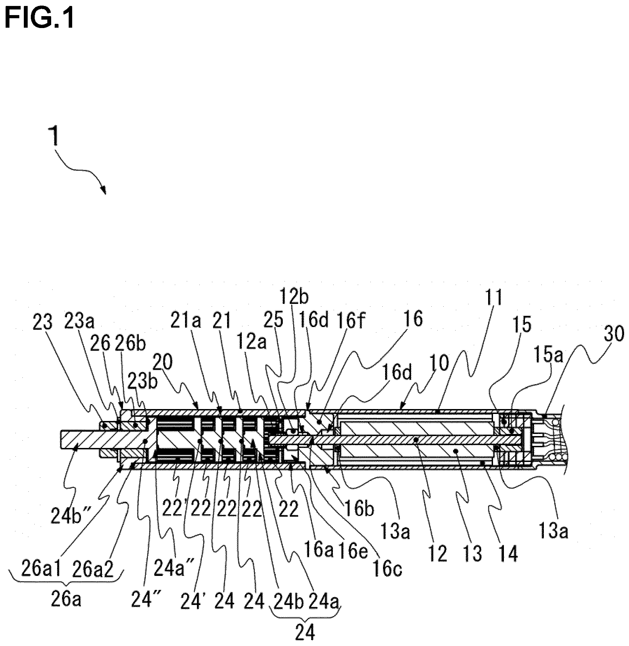

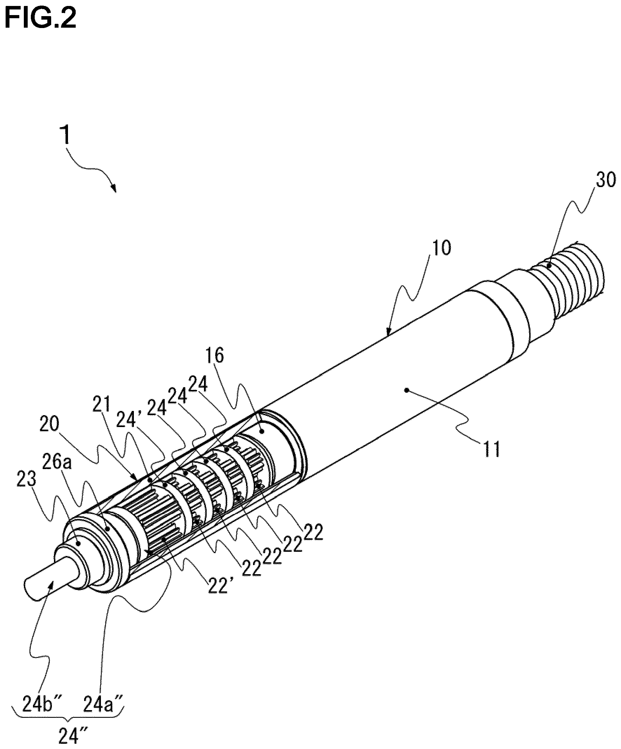

Figs. 1 and 2 illustrate a micro-geared motor 1 according to the present invention.

The micro-geared motor 1 coaxially connects a micro motor 10 and a planetary gear mechanism (driven unit) 20, and rotation of the micro motor 10 is transmitted to the planetary gear mechanism 20.

The micro motor 10 includes a tubular motor housing 11, a motor shaft 12 that is supported in the motor housing 11 and rotationally driven, a rotor 13 fixed to an outer periphery of the motor shaft 12, a coil 14 provided in a tubular form with a certain clearance against an outer periphery of the rotor 13, a substrate 15 for carrying electric power to the coil 14, and a connecting member 16 that covers one (left side in Fig. 1) of openings of the motor housing 11 and allows the motor shaft 12 to be inserted to project outward, and makes a brushless DC motor of inner rotor type.

The motor housing 11 is made of a magnetic material (such as permalloy) in a cylindrical form with both ends opened, gathers a magnetic flux of a magnet included in the rotor 13 to make a magnetic path, and functions to increase electromagnetic power generated when current flows through the coil 14.

The connecting member 16 is fixed at a front end of the motor housing 11 and the substrate 15 and a bearing 15a are fixed to a rear end of the motor housing 11. A long tubular flexible sheath 30 is connected to the rear end of the motor housing 11. A power feeding line, a line for a sensor, and the like connected to the substrate 15 are housed in the sheath 30.

The outer diameter of the motor housing 11 is substantially the same as the outer diameter of a tubular casing 21 of a planetary gear mechanism 20 described later. It is preferably set to equal to or less than φ3 mm, and it is φ2 mm in the example of the drawing. The outer diameter is the maximum diameter of the micro-geared motor 1.

The motor shaft 12 is supported so that the motor shaft 12 rotates at the center of the motor housing 11. The front end of the motor shaft 12 (left end in Fig. 1) projects toward the planetary gear mechanism 20 and a driving gear 12a is fixed to the projecting part. The driving gear 12a functions as a sun gear engaging with a plurality of planetary gears 22 described later from the center.

A positioning sleeve 12b is fixed to a part in the motor side than the driving gear 12a of the projecting part. The positioning sleeve 12b slidingly contacts with the front end surface of the connecting member 16 described later and regulates movement of the motor shaft 12 rearward (rightward in Fig. 1).

The rotor 13 is formed in a tubular shape with shorter length and smaller outer diameter than the motor housing 11 and fixed to an outer periphery of the motor shaft 12. The rotor 13 includes a permanent magnet and rotates by a magnetic function with the coil 14.

The reference numerals 13a and 13a in the drawing denote circular positioning members fixed to the motor shaft 12 so as to sandwich the rotor 13 from the front and the back.

The coil 14 is formed in a substantially tubular shape with braided conductor fiber, located with a certain clearance against an outer periphery of the rotor 13, and fixed to an inner periphery of the motor housing 11 so as not to rotate.

The substrate 15 is a circular multi-layer substrate and supplies electric power supplied from outside by a power feeding line to the coil 14. At the center of the substrate 15, the rear end of the motor shaft 12 is supported so as to freely rotate via the substantially tubular bearing 15a. A sensor or the like (not illustrated) for detecting a rotational angle of the motor shaft 12 is provided to the substrate 15 as necessary.

The connecting member 16 is formed in a substantially tubular shape with the rear end fitted in the motor housing 11 and the other end projecting forward from the motor housing 11.

An output side connecting part 16a for connecting the planetary gear mechanism 20 at one end of the axis direction, a motor side connecting part 16b for connecting the motor housing 11 of the micro motor 10 at the other end, a bearing 16c for supporting the motor shaft 12 to freely rotate at the inner diameter side, circular spaces 16d and 16d adjacent to both sides of the axis direction against the bearing 16c, and a positioning space 16e for providing the positioning sleeve 12b are formed integrally with the connecting member 16 in advance by cutting process.

That is, the connecting member 16 is fitted to the motor housing 11 from the front side after the output side connecting part 16a, the motor side connecting part 16b, the bearing 16c, the circular spaces 16d and 16d, and the positioning space 16e, and the like are integrally processed.

A material of the connecting member 16 may be a metal material with high cutting processability such as brass. However, other metal materials or a hard material such as synthetic resin material may also be used.

The output side connecting part 16a is a part to be fitted to the rear end of the casing of the planetary gear mechanism 20 described later and the cylindrical outer periphery of the output side connecting part 16a is made into contact with or made closer to the tooth tip of an internal gear 21 a to be fitted to the rear end of the casing of the planetary gear mechanism 20.

Adhesive agent is provided between the outer periphery of the output side connecting part 16a and the internal gear 21a in order to improve connection strength. As another example, the outer periphery of the output side connecting part 16a can be press-fitted to the tooth tip of the internal gear 21 a.

The motor side connecting part 16b is a part to be fitted to the front end of the motor housing 11 of the micro motor 10 and the outer periphery of the motor side connecting part 16b is formed in a cylindrical surface shape that can be fitted to the inner periphery of the motor housing 11. Adhesive agent is provided between the outer periphery of the motor side connecting part 16b and the inner periphery of the motor housing 11 as necessary. As another example, the motor side connecting part 16b can be press-fitted to the inner periphery of the motor housing 11.

A circular convex part 16f projecting toward the outer radial direction is formed between the output side connecting part 16a and the motor side connecting part 16b. The circular convex part 16f has substantially the same diameter as the outer shape of the micro motor 10 and the planetary gear mechanism 20 and is sandwiched between the casing 21 of the planetary gear mechanism 20 and the motor housing 11 of the micro motor 10.

The bearing 16c circularly projects toward the inner radial direction at the center of the axis direction of the whole connecting member 16. The inner periphery of the bearing 16c slidably contacts with the outer periphery of the motor shaft 12 so that the bearing 16c rotatably supports the motor shaft 12. The cross-sectional shape of the bearing 16c illustrated in the drawing is to be described in detail, the cross-sectional shape is a cross-sectional trapezoidal shape in which the width of the axis direction is tapered toward the inner radial direction (see Fig. 1).

The bearing 16c has a plurality of grooves (not illustrated) on the inner periphery for holding lubricant oil and serves as a dynamic pressure bearing that locally generates high lubrication film pressure at several locations in the circumferential direction.

Each of the circular spaces 16d and 16d is a circular space continuously extending in the circumferential direction along the whole circumference of the motor shaft 12 and holds lubricant oil. The lubricant oil in the circular spaces 16d and 16d penetrates between the bearing 16c and the outer periphery of the motor shaft 12. The lubricant oil has been applied to or injected to the front end of the motor shaft 12, the connecting member 16, and the like in the process of manufacturing the micro motor 10.

The positioning space 16e is a space with a large circular diameter shape in the front side with respect to the circular space 16d and includes the positioning sleeve 12b. The positioning sleeve 12b is fixed to the motor shaft 12 and regulates movement of the motor shaft 12 in the direction opposite to the direction of the planetary gear mechanism 20 (right direction in the drawing) by contact with the tubular member 16.

The planetary gear mechanism 20 includes the tubular casing 21 having opening ends at both ends and the internal gear 21a along the whole length in the axis direction, the plurality of planetary gears 22 and 22' that is engaged with the internal gear 21a and rotates by rotational force of the driving gear 12a, supporting rotational bodies 24, 24' and 24" that rotatably support the plurality of the planetary gears 22 and 22' and are rotatably supported, a partition member 25 that allows the driving gear 12a to be inserted with an allowance and contacts with a peripheral wall of the casing 21 along the whole circumference between the connecting member 16 and the planetary gears 22, and a front end side closing member 26 that covers the front end opening of the casing 21 and allows an output axis 24b"to pass to project forward (see Fig. 1).

The planetary gear mechanism 20 forms a multi-step planetary gear mechanism including the planetary gears 22 and 22', and supporting rotational bodies 24, 24', and 24" that are provided in multi-step form, reduces rotational force of the motor shaft 12 side in stages, and outputs the rotational force from the output axis 24b". That is, the planetary gear mechanism 20 is a driven unit with respect to the micro motor 10.

The casing 21 is formed in a long cylindrical shape with a hard material such as a metal material, and has the internal gear 21 a on its inner periphery.

The internal gear 21 a has convexes and concaves that form a tooth tip and a tooth bottom alternately provided in the circumferential direction and these convexes and concaves are continuously formed along the whole length of the axis direction of the inner periphery of the casing 21. That is, the internal gear 21a is continuous between the opening end of the micro motor side and the opening end of the opposite side in the casing 21. The output side connecting part 16a of the connecting member 16 is fitted to the opening end side of the micro motor side in the internal gear 21 a.

The planetary gears 22 and 22' are spur gears that are provided around the axis and engaged with the internal gear 21a. In the example of the figure, the reference numeral 22 denotes a four-stage planetary gear near the micro motor 10 and the reference numeral 22' denotes a one-stage planetary gear at the output side.

According to a preferred example of the present embodiment, the length of the axis direction of the planetary gears 22' at the output side is longer than that of the planetary gears 22 in order to improve strength.

The plurality of planetary gears 22 and the plurality of planetary gears 22' are provided in the circumferential direction with certain intervals. The plurality of planetary gears 22 nearest to the micro motor 10 engages with the driving gear 12a and receives driving force from the driving gear 12a.

The reference numeral 24 out of the plurality of supporting rotational bodies 24, 24', and 24" denotes a three-stage supporting rotational body near the micro motor 10, the reference numeral 24' denotes a supporting rotational body of the fourth stage from the micro motor 10, and the reference numeral 24" denotes a supporting rotational body nearest to the output.

The supporting rotational body 24 integrally includes a supporting plate 24a that rotatably supports the plurality of planetary gears 22 provided in the circumferential direction and the sun gear 24b that projects toward the output side from the center of the supporting plate 24a and engages with the planetary gears 22 around it.

The supporting rotational body 24' integrally includes a supporting plate 24a' that rotatably supports the plurality of planetary gears 22 of the fourth stage from the motor side and the sun gear 24b' that projects toward the output side from the center of the supporting plate 24a' and engages with the planetary gears 22' around it. The length in the axis direction of the sun gear 24b' is longer than that of the sun gear 24b of the planetary gear 22 as with the relation of the planetary gear 22' and the planetary gear 22.

The supporting rotational body 24" integrally includes a supporting plate 24a" that rotatably supports the plurality of planetary gears 22' of the fifth stage from the motor side and the output axis 24b" that projects toward the output side from the center of the supporting plate 24a".

A circular positioning sleeve 23 is fixed to the output axis 24b". The positioning sleeve 23 slidably contacts with the end surface of the front end side closing member 26 via a washer 23a and regulates movement of the output axis 24b" to the micro motor 10 side.

The reference numeral 23b in the drawing is a washer that is provided between the supporting plate 24a" and the front end side closing member 26 for reducing friction resistance of the supporting plate 24a".

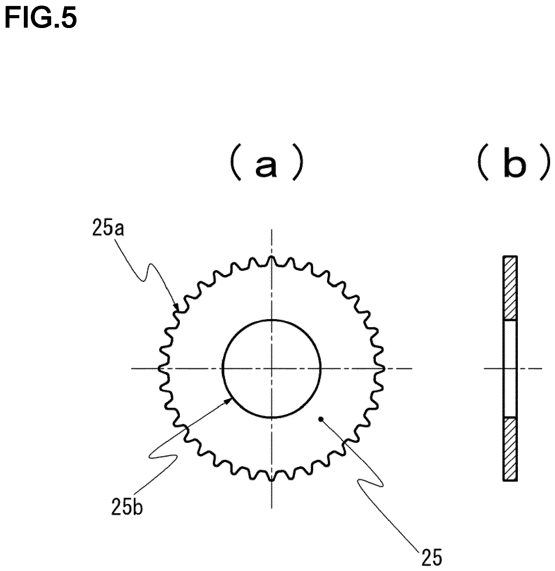

The partition member 25 has concavo-convex engaging teeth 25a at the outer periphery that engage with the internal gear 21 a (see Fig. 5) and engagement of the engaging tooth 25a with the internal gear 21a prevents flow of lubricant oil toward outside of the axis direction at the inner periphery of the casing 21. The lubricant oil has been applied to or injected to the planetary gears 22 and 22', the supporting rotational bodies 24, 24', and 24", and the like in the process of manufacturing the planetary gear mechanism 20.

A penetration hole 25b (see Fig. 5) for allowing the driving gear 12a to be inserted with an allowance is provided in the center of the partition member 25. The inner diameter of the penetration hole 25b is set so that the driving gear 12a can be inserted with an allowance and the positioning sleeve 12b cannot be inserted.

The front end side closing member 26 is formed by press-fitting a separate bearing 26b to the inner diameter side of a cylindrical bearing bracket 26a.

The bearing bracket 26a includes a cylindrical connecting part 26a1 engaged with the front end of the casing 21 and a circular flange 26a2 the diameter of which is increased at the front end of the connecting part 26a1 and which is pressure-contacted with the front end of the casing 21.

The connecting part 26a1 engages with the tooth tip of the internal gear 21 a with contact with or getting closer to the tooth tip to coaxially assembled to the internal gear 21 a. Adhesive agent is provided between the connecting part 26a1 and the internal gear 21a. As another example, the connecting part 26a1 can be press-fitted to the tooth tip of the internal gear 21 a.

According to the micro-geared motor 1 with the structure described above, since the connecting member 16 connecting the micro motor 10 and the planetary gear mechanism 40 integrally has the bearing 16c, the motor side connecting part 16b, the output side connecting part 16a, and the like, it is possible to omit a step for processing a surface to be engaged with another bearing, a step for assembling another bearing, and the like, to improve coaxiality between the bearing 16c and the motor side connecting part 16b and the output side connecting part 16a, and to manufacture a micro-geared motor with micro outer diameter of equal to or less than 3 mm with high accuracy and efficiency.

Moreover, since the bearing 16c integrally formed with the connecting member 16 serves as a dynamic pressure bearing, it is possible to effectively minimize unevenness of rotation of the rotating part and wobbling of the axis and to improve properties for holding lubricant oil by the circular spaces 16d and 16d secured at the both sides of the bearing 16c.

In addition, it is possible to prevent flow of lubricant oil at the planetary gear mechanism 20 side to the micro motor 10 side and leakage of the lubricant oil to outside from a gap of the connection part by the connecting member 16, by the partition member 25.

Next, another example of a micro-geared motor according to the present invention will be described.

Since a micro-geared motor described below is obtained by changing parts of the micro-geared motor 1 described above, only the parts that are changed will be described in detail and the same reference numerals are used and repetitive descriptions will be omitted for the parts that are the same as the micro-geared motor 1 described above.

### Second Embodiment

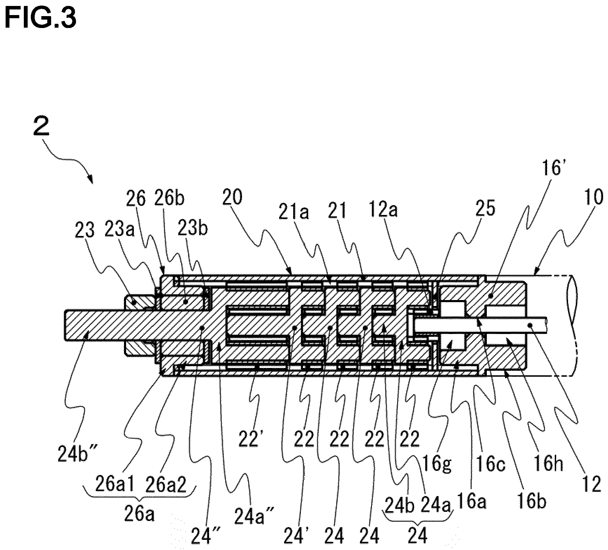

Fig. 3 is a cross-sectional view enlarging a part of a planetary gear mechanism in another example of a micro-geared motor according to the present invention.

A micro-geared motor 2 has a structure in which the connecting member 16 in the micro-geared motor 1 described above is replaced by a connecting member 16'.

In the connecting member 16', the shape of the space in front of and at the back of the bearing 16c is changed with respect to the connecting member 16 described above.

A circular space 16g in front of the bearing 16c functions as a space for holding lubricant oil. The circular space 16g may include the positioning sleeve 12b (see Fig. 1) as necessary.

A circular space 16h at the back of the bearing 16c functions as a space for holding lubricant oil as with the circular space 16d (see Fig. 1).

Therefore, the micro-geared motor 2 illustrated in Fig. 3 provides a substantially similar effect to the micro-geared motor 1 described above.

### Third Embodiment

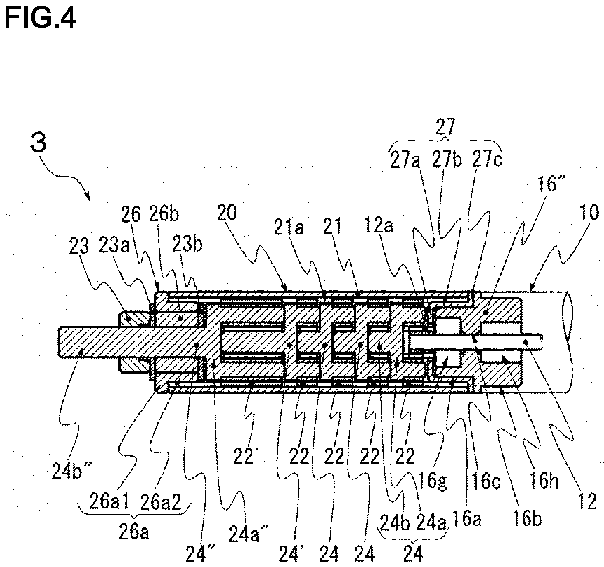

Fig. 4 is a cross-sectional view illustrating an enlarged part of a planetary gear mechanism side in another example of a micro-geared motor according to the present invention.

A micro-geared motor 3 includes a partition member 27 instead of the partition member 25 of the micro-geared motor 2 and a connecting member 16" instead of the connecting member 16' of the micro-geared motor 2.

The partition member 27 integrally includes a circular plate 27a for allowing the driving gear 12a to be inserted with an allowance, a cylindrical part 27b projecting toward the micro motor 10 side from the outer diameter side of the circular plate 27a, and a circular flange 27c projecting toward the diameter expansion direction from the end of the micro motor 10 side of the cylindrical part 27b (see Figs. 4 and 5).

A penetrating hole 27a1 (see Fig. 5) for allowing the driving gear 12a to be inserted with an allowance is provided in the center of the circular plate 27a. The inner diameter of the penetrating hole 27a1 is set so that the driving gear 12a can be inserted with an allowance and the positioning sleeve 12b cannot be inserted.

The cylindrical part 27b is inserted to the rear end of the casing 21 and its cylindrical outer periphery is made into contact with or made closer to the tooth tip of the internal gear 21 a to be fitted. Adhesive agent is provided between the outer periphery of the cylindrical part 27b and the internal gear 21 a as necessary. As another example, the cylindrical part 27b can be press-fitted to the tooth tip of the internal gear 21 a.

The circular flange 27c is located at the rear end of the casing 21 and prevents the lubricant oil in the casing 21 from leaking to outside.

The connecting member 16" is obtained by changing the connecting member 16' (see Fig. 3) so that the outer diameter of the output side connecting part 16a is fitted to the inner periphery of the cylindrical part 27b of the partition member 27.

Adhesive agent is provided between the outer periphery of the output side connecting part 16a and the inner periphery of the cylindrical part 27b in order to increase connection strength between these parts.

Therefore, the micro-geared motor 2 with the structure described above provides a substantially similar effect to the micro-geared motors 1 and 2 described above.

In the above embodiments, although the partition member 25 (or 27) is provided between the connecting member 16, 16', or 16" and the casing 21 in the micro-geared motor 1, 2, or 3, the partition member 25 (or 27) can be omitted. In that case, in the micro-geared motor 3, the connecting member 16" may be directly connected to the casing 21.

In the above embodiments, although the front end side closing member 26 at the front end of the planetary gear mechanism 20 is formed by press-fitting the separate bearing 26b, the front end side closing member 26 can be formed by integrally processing a bearing as with the connecting member 16.

In the above embodiments, although the circular space 16d, 16g, or 17h for holding lubricant oil is provided at both sides of the bearing 16c in the connecting member 16, 16', or 16", it is possible to provide the circular space 16d, 16g, or 17h at one side of the bearing 16c as another example.

In the above embodiments, although the planetary gear mechanism 20 is connected to the micro motor 10 as a driven unit, it is also possible to connect another driven unit than the planetary gear mechanism 20 to the micro motor 10 as another example. In this case, examples of the driven unit include equipment for OCT (Optical Coherence Tomography), imaging device, reflection device having a mirror or the like, cutting device having a cutter or the like, rotating tool, and power transmission mechanism other than those with the structure described above.

### DESCRIPTION OF REFERENCE SIGNS

- 1, 2, 3:: Micro-geared motor
- 10:: Micro motor
- 11:: Motor housing
- 12:: Motor shaft
- 12a:: Driven gear
- 13:: Rotor
- 14:: Coil
- 15:: Substrate
- 15a:: Bearing
- 16, 16', 16":: Connecting member
- 16a:: Output side connecting part
- 16b:: Motor side connecting part
- 16c:: Bearing
- 16d, 16g, 16h:: Circular space
- 16e:: Positioning space
- 16f:: Circular convex part
- 20:: Planetary gear mechanism (driven unit)
- 21:: Casing
- 21a:: Internal gear
- 22, 22':: Planetary gear
- 23:: Sleeve
- 23a, 23b:: Washer
- 24, 24', 24":: Supporting rotational body
- 24a, 24a', 24a":: Supporting plate
- 24b, 24b':: Sun gear
- 24b":: Output axis
- 25, 27:: Partition member
- 25a:: Engaging tooth
- 25b, 27a1:: Penetration hole
- 26:: Front end side closing member
- 26a:: Bearing bracket
- 26a1:: Connecting part
- 26a2:: Circular flange
- 26b:: Bearing
- 27a:: Circular plate
- 27b:: Cylindrical part
- 27c:: Circular flange
- 30:: Sheath

## Claims

1. A micro motor comprising:
a tubular motor housing;
a motor shaft that is supported in the motor housing and rotationally driven; and
a connecting member for covering one opening of the motor housing and allowing the motor shaft to be inserted to project outward, wherein
the micro motor is capable of transmitting rotation of the motor shaft to a driven unit as another unit, and
the connecting member integrally includes a bearing for rotatably supporting the motor shaft and an output side connecting part that can be connected to a casing of the driven unit.

2. The micro motor according to claim 1, wherein the bearing functions as a dynamic pressure bearing for locally generating high lubrication film pressure at several locations in a circumferential direction.

3. The micro motor according to claim 1 or 2, wherein a circular space surrounding an outer periphery of the motor shaft adjacent to an axis direction against the bearing is provided in an inner diameter side of the connecting member, and lubricant oil is held in the circular space.

4. The micro motor according to claim 3, wherein the bearing is provided to a center side of an axis direction of the whole connecting member and two circular spaces are provided adjacent to both sides of the bearing.

5. The micro motor according to any one of claims 1 to 4, wherein
the output side connecting part is connectable to the casing of the driven unit, and
the output side connecting part is formed in a tubular shape that can be fitted to an end of the casing.

6. The micro motor according to any one of claims 1 to 5, wherein the connecting member has the output side connecting part at one end and a motor side connecting part fitted to the motor housing at the other end.

7. The micro-geared motor according to any one of claims 1 to 6, wherein a planetary gear mechanism as the driven unit is connected to the output side connecting part and speed of rotational force transmitted from the motor shaft is changed by the planetary gear mechanism to be output.

8. A method for manufacturing the micro motor according to any one of claim 1 to 6 comprising integrally processing the bearing and the output side connecting part against the connecting member.
